(19) **Europäisches Patentamt / European Patent Office / Office européen des brevets**

(11) **EP 1 522 803 B1**

(12) # EUROPEAN PATENT SPECIFICATION

(45) Date of publication and mention
of the grant of the patent:
**12.11.2008   Bulletin 2008/46**

(51) Int Cl.:
**F25B 41/06** *(2006.01)*

(21) Application number: **04021619.4**

(22) Date of filing: **10.09.2004**

(54) **Constant differential pressure valve**

Konstantdifferential Druckventil

Vanne à pression differentielle constante

(84) Designated Contracting States:
**DE FR IT**

(30) Priority: **12.09.2003   JP 2003320508**

(43) Date of publication of application:
**13.04.2005   Bulletin 2005/15**

(73) Proprietor: **TGK COMPANY, LTD.**
**Tokyo 193-0942 (JP)**

(72) Inventor: **Hirota, Hisatoshi**
**Hachioji-shi**
**Tokyo 193-0942 (JP)**

(74) Representative: **Grünecker, Kinkeldey,**
**Stockmair & Schwanhäusser**
**Anwaltssozietät**
**Leopoldstraße 4**
**80802 München (DE)**

(56) References cited:
**US-A- 4 638 973**          **US-B1- 6 182 457**
**US-B1- 6 367 283**

• **PATENT ABSTRACTS OF JAPAN vol. 017, no. 068 (M-1365), 10 February 1993 (1993-02-10) -& JP 04 272589 A (TEE JII KEE:KK), 29 September 1992 (1992-09-29)**
• **PATENT ABSTRACTS OF JAPAN vol. 1998, no. 09, 31 July 1998 (1998-07-31) -& JP 10 089523 A (RANCO JAPAN LTD), 10 April 1998 (1998-04-10)**
• **PATENT ABSTRACTS OF JAPAN vol. 2002, no. 02, 2 April 2002 (2002-04-02) & JP 2001 273039 A (TGK CO LTD), 5 October 2001 (2001-10-05)**
• **PATENT ABSTRACTS OF JAPAN vol. 2000, no. 02, 29 February 2000 (2000-02-29) & JP 11 316068 A (TGK CO LTD), 16 November 1999 (1999-11-16)**

## Description

The invention relates to a constant differential pressure valve according to the preamble of claim 1.

In a refrigeration cycle e.g. of an automotive air conditioner, high-temperature, high-pressure gaseous refrigerant compressed by a compressor is condensed or cooled by a condenser or a gas cooler, and then is changed by a decompression device into low-temperature, low-pressure refrigerant, before it is evaporated by an evaporator. The evaporated refrigerant is separated into gas and liquid by an accumulator. The gaseous refrigerant is returned to the compressor.

The decompression device (JP-A-H11-316068) is a constant differential pressure valve for electrically controlling the differential pressure. A differential pressure control mechanism is integrated into a body block separate from piping of the refrigeration cycle. Separately connected pipes introduce the high-pressure refrigerant and deliver the decompressed refrigerant to the evaporator. An internal valve element is operated by supplying a predetermined electric current to a solenoid. The flow rate is controlled such that the differential pressure across the constant differential pressure valve is held constant. The arrangement of a separate body block and of the pipes increase the size of the entire constant differential pressure valve and occupies a large amount of precious mounting space. An internal refrigerant passage where internal structures of the differential pressure control mechanism, such as the valve element, are arranged, and a solenoid section are separately disposed in the body block. Further, it is necessary to perform complicated adjustment for arranging the respective pipes of refrigerant inlet and outlet passages and the internal refrigerant passage connecting the pipes, which increases the manufacturing costs.

JP-A-04272589 discloses a constant differential pressure valve for regulating the amount of petroleum in a petroleum hot water feeder by generating a differential pressure corresponding to a current value of the current supplied to a solenoid coil. When the valve is closed the movable core is loaded by the inlet pressure on an effective pressure receiving area corresponding to the size of the surface at which a flexible valve element insert abuts on the valve seat in valve closing direction. The movable core is loaded in both moving directions by springs. Upstream of the movable core a second ball valve is provided. The solenoid has to be relatively strong, because for moving the movable core to the reference position the full force of the inlet pressure acting in valve closing direction has to be overcome.

It is an object of the invention to provide a constant differential pressure valve in particular for a refrigeration cycle which is compact in size and can be manufactured for fair cost.

This is object is achieved by the features of claim 1.

Here, the mentioned "pipe" may, for example, be provided exclusively for the constant differential pressure valve itself, and is then connected to the piping of the refrigeration cycle by a joint or the like, or alternatively, is already a part of the piping of the refrigeration cycle. The mentioned "predetermined reference position" is a position at which the differential pressure is equal to the constant differential pressure set in advance, and means a position at which a balance of the internal refrigerant pressures and urging forces applied to the movable core is achieved.

In the constant differential pressure valve, the movable core is moved toward or away from the fixed core by energizing or de-energizing the solenoid coil. This produces valve-opening or valve-closing operations of the differential pressure control mechanism to correspondingly adjust the size of the internal passage cross-section. Refrigerant from upstream is decompressed by being expanded when flowing downstream via the fixed core and the movable core through the differential pressure control mechanism. The flow rate is controlled such that the differential pressure between respective pressures at the inlet and the outlet is equal to the constant differential pressure dependent on the value of the electric current supplied to the solenoid coil. The pipe forming the body does not only accommodate the internal structures, such as the differential pressure control mechanism, the fixed core, and the movable core, but also is a part of the piping of the refrigeration cycle. Part of the refrigerant introduced from upstream is also introduced via the communication hole into the inner space of the movable core. The inlet pressure and the pressure in the inner space become equal. Hence, a considerable part of the pressure force applied in valve opening direction to the valve portion and also to the movable core is cancelled by the inlet pressure also acting in valve closing direction in the inner space. Even if the cross-section of the valve seat is large, the valve can be controlled by a relatively weak solenoid and, furthermore, also the spring urging the movable core in valve closing direction can have a small spring force.

An embodiment of the invention will be described with reference to the drawings.

Fig. 1   is a cross-section of a constant differential pressure valve, in a first.

Fig. 2   shows a second state.

Fig. 3   is a diagram of a differential pressure/current characteristic.

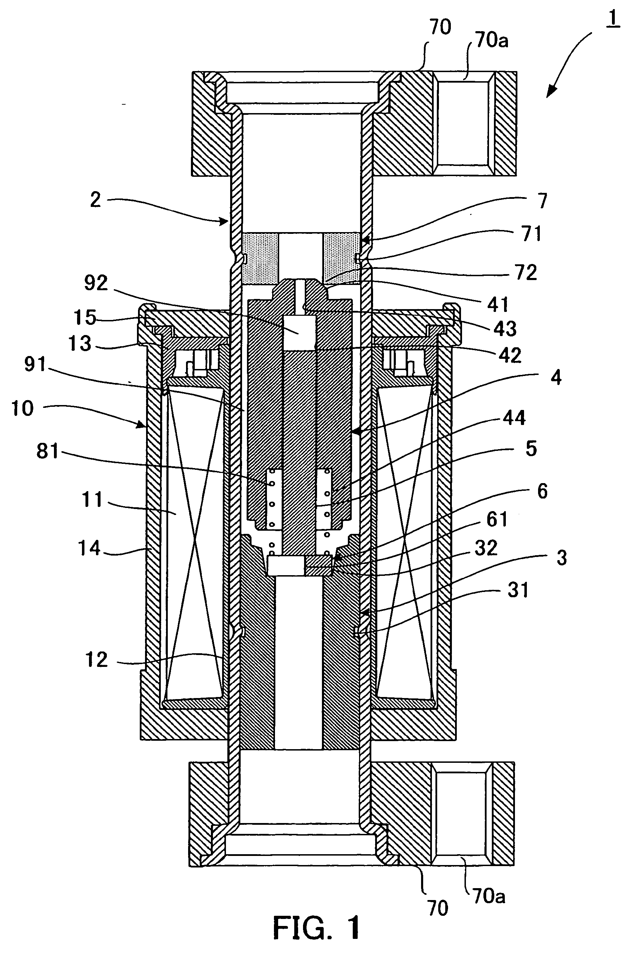

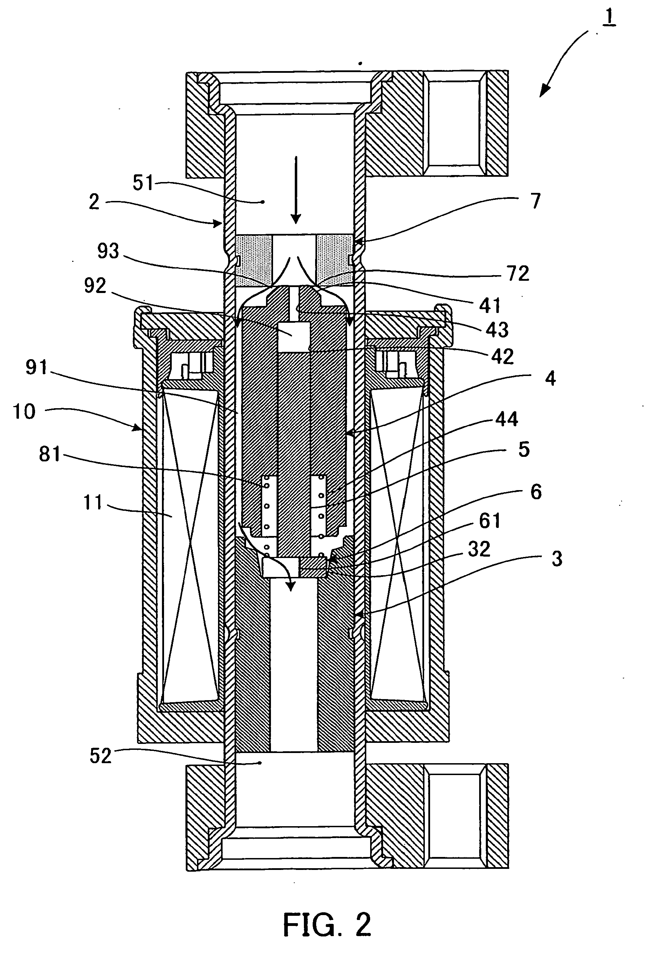

In Figs 1, 2, a constant differential pressure valve 1 comprises a body formed by a hollow cylindrical pipe 2 having opposite open ends, a fixed core 3, a movable core 4, a solid shaft 5, a stopper 6, and a hollow cylindrical member 7, accommodated in the pipe 2, and a solenoid section 10 disposed on and surrounding the periphery of the pipe 2.

Piping joints 70 of generally oval shape are attached to the opposite ends of the pipe 2. Each pipe has the diameter increased after the piping joint 70 is fitted on the pipe 2. The piping joint 2 has a through hole 70a for a bolt.

To connect the valve 1 to the piping of the not shown refrigeration cycle, piping joints identical to the piping joint 70 are fitted on pipes of the piping of the refrigeration cycle. Each pair of associated piping joints are connected via an O ring by a bolt through the aligned through holes and by tightening a nut, such that the pipe 2 is a part of a refrigerant passage.

The fixed core 3 has a hollow cylindrical body with a circumferential peripheral fitting groove 31. The diameter of the upstream end of the fixed core 3 is increased by a predetermined amount to accommodate and fix the stopper 6. The fixed core 3 is fixed in the pipe 2 swaging the wall of the pipe 2 into the fitting groove 31.

The movable core 4 has a bottomed hollow cylinder body. The bottom is located on the upstream side. The movable core 4 is disposed within the pipe 2 at a location upstream of the fixed core 3. A tapered valve portion 41 (the outer diameter progressively decreased upstream) protrudes from the upstream end of the movable core 4. A communication hole 43 extends axially through the valve portion 41, for introducing refrigerant into a bore part 42 within the movable core 4. The movable core 4 is axially movably guided on the solid shaft 5 which is rigidly secured in the pipe 2.

The inner diameter of the downstream end of the movable core 4 is increased by a predetermined amount to form a chamber 44 accommodating a spring 81. A clearance passage 91 is provided between the movable core 4 and the inner wall of the pipe 2.

The solid shaft 5 has a column-shaped body with an outer diameter approximately equal to the inner diameter of the bore part 42 of the movable core 4. The downstream end of the solid shaft 5 is fixed to the upstream end face of the stopper 6. The upstream end face of the solid shaft 5 and the inner wall of the movable core 4 at the bore part 42 define an inner space 92 communicating with the communication hole 43.

The stopper 6 has a disk-shaped body and is press-fitted into a stepped portion 32 in the increased-diameter portion of the fixed core 3. The stopper 6 contains an axial slit 61 in one-side as a part of the refrigerant passage through the constant differential valve 1. The spring 81 (elastic member) between the stopper 6 and the downstream facing wall of the chamber 44 of the movable core 4 supports the movable core 4 by the fixed core 3 when the solenoid section 10 is de-energised.

The hollow cylindrical member 7 is disposed in the pipe 2 at a location upstream of the movable core 4. The hollow cylindrical member 7 has a circumferential peripheral fitting groove 71 and is fixed in the pipe 2 by swaging the wall of the pipe 2 into the fitting groove 71. The rim of an opening of a fixed passage 95 in the hollow cylindrical member 7 forms a valve seat 72 for the valve portion 41 of the movable core 4.

The solenoid section 10 has a generally hollow cylindrical shape, and contains a first bobbin 12 with a solenoid coil 11 wound around the outer periphery of the pipe 2. On the upstream end of the first bobbin 12, there is disposed a second bobbin 13 which cooperates with the first bobbin 12 to form a passage for lead wires to the terminals of the solenoid coil 11. The first and second bobbins 12, 13 are enclosed by a first yoke 14. The upstream end of the first yoke 14 is closed by a second yoke 15 to form, together with fixed core 3 and the movable core 4, a continuous magnetic circuit.

Fig. 1 shows a state of the de-energised solenoid coil 11, , while Fig. 2 shows a state of the energized solenoid coil 11.

In Fig. 1, the movable core 4 is urged upstream by the spring 81. The valve portion 41 is seated on the valve seat 72 (fully-closed state).

In Fig. 2, an electric current i is supplied to the solenoid coil 11. An electromagnetic force the magnitude of which corresponds to the value of the electric current i is generated attracting the movable core 4 toward the fixed core 3. The valve portion 41 moves away from the valve seat 72 into a position where the electromagnetic force and the load of the spring 81 are balanced, whereby a predetermined passage cross-section is formed between the valve portion 41 and the valve seat 72.

High-pressure refrigerant introduced from upstream is adiabatically expanded through a refrigerant passage 93 between the valve portion 41 and the valve seat 72, and further flows downstream through the clearance passage 91 and the slit 61.

At this time, part of the refrigerant introduced from upstream is also introduced via the communication hole 43 into the inner space 92. The inlet pressure and the pressure in the inner space 92 become equal. Hence, a part of the pressure applied to the valve portion 41 and hence to the movable core 4, is cancelled.

The pressure at a refrigerant inlet 51 is P1, the outlet pressure, which has been reduced due to passage of the refrigerant through the refrigerant passage 93 is P2, and an effective pressure-receiving area of the valve portion 41 in a seated state (i.e. the passage cross-section of the hollow cylindrical member 7) is A. The cross-sectional area of the inner space 92 is B, the electromagnetic force generated by the current i is f(i), and the load of the spring 81 in the upstream is fs. The relationship between the upward and downward forces is:

$$(A - B)(P1 - P2) = fs - f(i) \qquad ...(1)$$

The differential pressure (P1 - P2) is:

$$P1 - P2 = (fs - f(i))/(A - B) \qquad ...(2)$$

In the right side of (2), the parameters except the electromagnetic force f(i) are substantially fixed values, and therefore the differential pressure (P1 - P2) is held at a constant value proportional to the electric current i supplied to the solenoid coil 11.

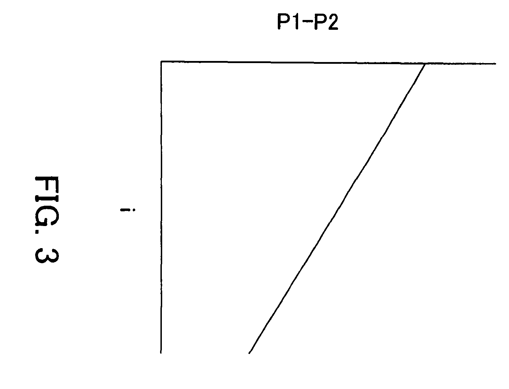

In Fig. 3, the abscissa represents the value of the electric current i, and the ordinate represents the differential pressure (P1 - P2).

In the fully closed, de-energised state (Fig. 1) the differential pressure (P1 - P2) is held at the maximum.

When electric current i is supplied to the solenoid coil 11, the electromagnetic force f(i) is generated at the movable core 4 The valve portion 41 immediately moves from the seated position to a position where the electromagnetic force f(i) and the spring load fs are balanced, and stops there. Refrigerant flows at a flow rate which holds the differential pressure constant.

At this time, if the flow rate (in the refrigeration cycle) upstream of the constant differential pressure valve 1 increases and raises the inlet pressure P1, the valve portion 41 moves in valve-opening direction to increase the flow rate, and such that its effective pressure-receiving area is increased, thereby holding the differential pressure (P1 - P2) constant. If the refrigerant flow rate in the refrigeration cycle decreases upstream of the constant differential pressure valve 1 and lowers the inlet pressure P1, the valve portion 41 moves in valve-closing direction to reduce the flow rate and such that the effective pressure-receiving area is decreased, thereby holding the differential pressure (P1 - P2) constant. Thus, the differential pressure (P1 - P2) is always held at a constant value determined by the value of the electric current i.

## Claims

1. A constant differential pressure valve (1) defining a flow regulating valve in a flow passage for controlling the flow rate such that the differential pressure (P1-P2) is held at a constant level set by the value of an electric current (i) supplied to a solenoid coil of a solenoid section of the valve (1), the valve (1) comprising:

   a pipe (2) forming a part of the flow passage, a fixed hollow cylindrical core (3) in the pipe (2), an axially movable hollow cylindrical core (4) in the pipe (2) axially opposed to the fixed core (3), the solenoid coil (11) circumferentially surrounding the pipe (2) for including a magnetic circuit including said movable and said fixed core (3, 4) to generate an electromagnetic force on the movable core, the magnitude of which corresponds to the value of the supplied current, and to move the movable core (4) to a predetermined reference position with respect to the fixed core (3),
   a differential pressure control mechanism in the pipe (2) for performing valve opening or valve closing operations while the movable core (4) moves to and from the predetermined reference position, to adjust an internal flow rate controlling passage cross-section,
   a valve seat (72) provided at an end of a fixed passage (95) in the pipe (2),
   the movable core (4) having a hollow cylindrical body with a valve portion (41) defining a valve element at an extreme core end,
   the movable core (4) defining an axially extending clearance passage (91) of a predetermined size with the pipe (2),
   the valve portion (41) co-acting with the valve seat (72) by motions of the movable core (4) to define refrigeration gap between the valve element and the valve seat when the valve element is moved open, and
   a passage cross-section between the valve element and the valve seat (72) being adjusted in size by the motions of the movable core (4), to hold the differential pressure (P1-P2) at the constant level,
   **characterised in that** a solid column-shaped shaft (5) is fixed at an end side part in the pipe (2) of a refrigeration cycle for axially movably guiding the movable core (4) on another end side part of the shaft (5),
   the shaft (5) having an outer diameter approximately equal to the inner diameter of a bore part (42) of the movable core (4),
   and that the movable core (4) in co-action with the solid shaft (5) forms a predetermined inner space (92) which communicates via a communication hole (43) in the valve portion (41) with the fixed passage (95), the predetermined inner space (92) having a cross-section smaller than the passage cross-section of the fixed passage (95).

## Patentansprüche

1. Konstantdifferentialdruckventil (1), das in einer Strömungspassage ein Stromregelventil zum Steuern der Strömungsrate definiert, mit dem der Differentialdruck (P1-P2) auf einem konstanten Niveau haltbar ist, eingestellt mit einem Wert elektrischen Stroms (i), welcher einer Magnetspule einer Magnetsektion des Ventils (1) zugeführt wird, mit:

   einem einen Teil der Strömungspassage bildenden Rohr (2) und einem in dem Rohr (2) fixierten hohlen zylindrischen Kern (3),
   einem axial gegenüberliegend zu dem fixierten Kern (3) in dem Rohr (2) axial beweglichen, hohlen zylindrischen Kern (4),
   wobei die Magnetspule (11) das Rohr (2) zum Ausbilden eines magnetischen Kreises umfänglich umgibt, einschließlich der beweglichen und fixierten Kerne (3, 4), um eine elektromagnetische Kraft an dem beweglichen Kern zu generieren, deren Größe mit dem Wert des zugeführten Stroms korrespondiert, und um den beweglichen Kern (4) in Bezug auf den fixierten Kern (3) zu einer vorbestimmten Referenzposition zu bewegen,

einem Differentialdruck-Steuermechanismus in dem Rohr (2) zum Durchführen von Ventilöffnungs- oder Ventilschließoperationen, während sich der bewegliche Kern (4) zu der und aus der vorbestimmten Referenzposition bewegt, um einen Querschnitt einer inneren Strömungsraten-Steuerpassage einzustellen,

einem an einem Ende einer Passage (95) mit festgelegter Größe in dem Rohr (2) vorgesehenen Ventilsitz (72),

wobei der bewegliche Kern (4) einen hohlen zylindrischen Körper mit einem der an einem extremen Kemende ein Ventilelement definierenden Ventilabschnitt (41) aufweist,

der bewegliche Kern (4) mit dem Rohr (2) eine sich axial erstreckende Spaltpassage (9) einer vorbestimmten Größe definiert,

der Ventilabschnitt (41) durch Bewegungen des beweglichen Kerns (4) mit dem Ventilsitz (72) zusammenwirkt, und zwischen dem Ventilelement und dem Ventilsitz einen Kühlungsspalt definiert, wenn das Ventilelement zu einer offenen Stellung bewegt ist, und

die Größe eines Querschnitts des Kühlungsspalts zwischen dem Ventilelement und dem Ventilsitz (72) durch Bewegungen des beweglichen Kerns (4) so eingestellt wird, dass der Differentialdruck (P1-P2) an dem konstanten Niveau gehalten wird,

**dadurch gekennzeichnet, dass** in dem Rohr (2) eines Kühlkreises ein ein endseitiger Teil eines soliden, säulenförmigen Schafts (5) so fixiert ist, dass der bewegliche Kern (4) an einem anderen endseitigen Teil des Schaftes (5) axial beweglich geführt wird,

wobei der Schaft (5) einen Außendurchmesser besitzt, der annähernd dem Innendurchmesser eines Bohrungsteils (42) des beweglichen Kerns (4) gleich ist,

und dass der bewegliche Kern (4) im Zusammenwirken mit dem soliden Schaft (5) einen vorbestimmten inneren Raum (92) bildet, der über eine Kommunikationsöffnung (43) in dem Ventilabschnitt (41) mit der Passage (95) mit festgelegter Größe kommuniziert, und der einen Querschnitt besitzt, der kleiner ist als der Durchgangsquerschnitt des Durchgangs (95) mit der festgelegten Größe.

## Revendications

1. Soupape à pression différentielle constante (1) définissant une soupape de régulation de débit dans un passage d'écoulement destinée à commander le débit de telle sorte que la pression différentielle (P1 - P2) est maintenue à un niveau constant réglé par la valeur d'un courant électrique (i) appliqué à une bobine de solénoïde d'une section à solénoïde de la soupape (1), la soupape (1) comprenant :

un tuyau (2) formant une partie du passage d'écoulement, un noyau cylindrique creux fixe (3) disposé dans le tuyau (2),

un noyau cylindrique creux mobile dans la direction axiale (4) disposé dans le tuyau (2) dans la direction axiale en opposition au noyau fixe (3),

la bobine de solénoïde (11) entourant la circonférence du tuyau (2) afin d'incorporer un circuit magnétique comprenant ledit noyau mobile et ledit noyau fixe (3, 4) afin de générer une force électromagnétique sur le noyau mobile dont l'amplitude correspond à la valeur du courant fourni et de déplacer le noyau mobile (4) sur une position de référence prédéterminée par rapport au noyau fixe (3),

un mécanisme de commande de pression différentielle disposé dans le tuyau (2) destiné à exécuter des opérations d'ouverture de soupape ou de fermeture de soupape lorsque le noyau mobile (4) se déplace vers et à partir de la position de référence prédéterminée, afin de régler une section de passage de commande de débit interne,

un siège de soupape (72) aménagé à une extrémité d'un passage fixe (95) dans le tuyau (2), le noyau mobile (4) comprenant un corps cylindrique creux comportant une partie de soupape (41) qui définit un élément de soupape à une extrémité extrême de noyau,

le noyau mobile (4) définissant un passage à espace libre (91) s'étendant dans direction axiale d'une dimension prédéterminée par rapport au tuyau (2),

la partie de soupape (41) agissant conjointement avec le siège de soupape (72) grâce à des déplacements du noyau mobile (4) afin de définir un espace de réfrigération entre l'élément de soupape et le siège de soupape lorsque l'élément de soupape se déplace sur la position ouverte, et

une section de passage entre l'élément de soupape et le siège de soupape (72) étant réglé en dimension par les déplacements du noyau mobile (4) afin de maintenir la pression différentielle (P1 - P2) à un niveau constant,

**caractérisée en ce qu'**un axe plein en forme de colonne (5) est fixé sur une partie du côté de l'extrémité dans le tuyau (2) d'un cycle de réfrigération, afin de guider le déplacement dans la direction axiale du noyau mobile (4) sur une autre partie d'extrémité de l'axe (5),

l'axe (5) ayant un diamètre extérieur approximativement égal au diamètre intérieur d'une partie d'alésage (42) du noyau mobile (4),

et **en ce que** le noyau mobile (4) qui agit conjointement avec l'axe plein (5) forme un espace intérieur prédéterminé (92) qui est en communication par l'intermédiaire d'un orifice de communication (43) aménagé dans la partie de soupape (41) avec le passage fixe (95), l'espace intérieur prédéterminé (92) ayant une section plus petite que la section de passage du passage fixe (95).

FIG. 1

## FIG. 2

FIG. 3

**EP 1 522 803 B1**

### Patent documents cited in the description

- JP H11316068 A
- JP 04272589 A